# EUROPEAN PATENT APPLICATION

(11) **EP 3 141 100 A1**
(43) Date of publication of application: **15.03.2017**
(21) Application number: 16188338.4
(22) Date of filing: 12.09.2016
(51) Int. Cl.: A01D 34/78, A01D 80/00

(54) **ROTATABLE AGRICULTURAL TOOL**

(30) Priority: 11.09.2015 GB 201516114
(71) Applicant: AGCO International GmbH, 8212 Neuhausen am Rheinfall (CH); AGCO Feucht GmbH, 90537 Feucht (DE)
(72) Inventor: WITTMANN, Paul, 90537 Feucht (DE); REIDEL, Juergen, 90537 Feucht (DE); SPIELER, Raphale, 90537 Feucht (DE); BREU, Wolfgang, 87616 Marktoberdorf (DE)
(74) Representative: AGCO Intellectual Property Department

(57) **Abstract**

An electrically driven rotatable agricultural tool comprises an implement carrying rotor (1) to which magnets (9) are attached. The rotor rotates about a shaft (3,3b). A plurality of electric coils (7) are arranged which are stationary with respect to the rotor so that when an electric current passes through the coils (7) under the influence of the magnetic field of the magnets (9), rotor (1) rotates and thus the implement carried rotates.

## Description

This invention relates to a drive assembly for a rotatable agricultural tool. More specifically, this invention relates to a motor located on an agricultural tool such as a rake, a mower or a tedder.

Agricultural rakes generally comprises a frame, ground engaging wheels for supporting the frame on the ground, and at least one rotor which is driven in rotation about a vertical rotor axis. In use, the frame is attached to the rear of an agricultural tractor by means of a drawbar and towing hitch for example. The frame comprises a main body which extends longitudinally in the direction of travel of the tractor and at least one rotor arm which when in use extends from the main body transverse to the direction of travel. The rotor is located at the end of the rotor arm. When not in use the rotor arm may be moved into a transport position in which the rotor is raised and brought closer to the main body.

Each rotor comprises a hub and a plurality of tine arms extending tangentially from the hub. Crop engaging tines are attached to the radially outermost ends of the arms for raking or windrowing cut forage material laying on the ground. To engage and release the crop material, the tines are respectively lowered and raised at predetermined positions around the rotary circumferential path. To effect this lowering and raising the innermost end of each tine arm is slideably engaged in a cam track. As the rotor rotates rollers on the arms move along the circular cam track which serves to twists the tine arms on their respective axes, thus raising and lowering the tines. The rotor torque is transferred from a power take-off (PTO) stub on the tractor to the rotors by a drive train. The drive train is mechanically operable and extends along the length of the main body and branches along each rotor arm and into a rotor housing for engagement with the rotor. Known drive trains are provided with gear connections to allow for movement of the rotor arm between the working and transport positions. Such an arrangement is present on rakes marketed by the applicant today under the brand "Fella", including model TS12555.

Since the drive train is driven by the PTO via the drive train shaft along the main body, the speed of each rotor is the same and cannot be controlled individually. This leads to a waste of energy and lack of efficiency when not all the rotors are required. Moreover, due the number of different parts of the driveline, a quick stop of one rotor is not possible, for example in an emergency when the tines become caught. Since the rotors are coupled in a fixed relationship to the drive train, the joints can become worn especially due to the rotor arm movement which can lead to oil leakage.

It is an aim of the present invention to provide an alternative drive means for a rotor of an agricultural tool which addresses or at least alleviates the aforementioned problems of the known drivetrain.

According to the invention there is provided an electrically driven rotatable agricultural tool comprising an implement carrying rotor to which magnets are attached and which rotates about a shaft and wherein a plurality of electric coils are arranged which are stationary with respect to the rotor so that when an electric current passes through the coils under the influence of the magnetic field of the magnets, the rotor rotates and thus the implement carried by the rotor rotates.

The use of coils and magnets to provide an electrically driven rotor in place of known mechanical drive trains uses fewer, more lightweight parts and thus reduces manufacturing costs. In addition, an electrically driven rotor can be controlled separately from other rotors leading to greater efficiency.

Preferably, the magnets are arranged within a housing connected to the shaft.

Preferably, the coils are arranged on a ring frame connected to the shaft.
The ring frame provides a surface to which the coils are attached and provides a means through which wires of the coils can be protectively routed back to the tractor.

Alternatively, the coils are attached to the housing. The inside walls of the housing can also provide a surface to which the coils can be attached.

Preferably, the magnets are arranged in a spaced arrangement on the rotor. Such an arrangement means that there are spaces between each magnets, thus reducing the cost and weight of having a whole magnet and making them cheaper and easier to replace if they are damaged.

More preferably, the magnets are arranged in a spaced ring arrangement on the rotor.

Preferably, the magnets are arranged in a horizontal plane on the rotor.

Alternatively, the magnets are arranged in a vertical plane on the rotor.

In accordance with a further aspect of the invention, there is provided an electrically driven rotatable agricultural tool comprising a rotatable shaft to which a rotor and a plate are meshed to rotate together, said plate housed within a stationary housing through which the shaft passes, wherein the plate is provided with magnets and within the housing stationary coils are arranged so that when an alternating current passes through the coils under the influence of the magnetic field of the magnets, a force is produced to rotate the plate and thus the rotor.

The invention will now be described, by way of example only, with reference to the following drawings in which:
Figure 1 is a cross section of a rotor of an agricultural mower in accordance with the invention,
Figure 2 is a perspective view of a rotor of a tedder or rake in accordance with the invention, and
Figure 3 is a perspective view of a rotor of a tedder or rake in accordance with an alternative arrangement of the invention.

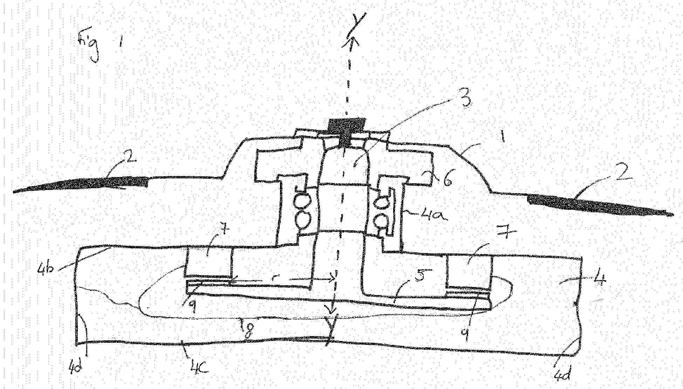

Figure 1 is cross section of a rotor 1 of an agricultural mower which is fitted with an implement. Here the implement is a mower blade 2. The rotor 1 when in operation is rotated around an axis Y by means of rotating shaft 3. The mower may, for example, be of the type in which a plurality of rotors are placed in a row on the mower frame (not shown) and the mower frame is attached to a tractor. With such a mower, the rotors extend transversely to the direction of travel of the tractor and as is known with the prior art, each rotor is connected to a main drive which extends along the frame and which is driven by the PTO of the tractor. The shaft 3 of the prior art is driven by a driveline from the main drive which connects with the shaft 3 through a circular neck 4a of housing 4 located underneath the rotor. Housing 4 is circular in shape having upper and lower walls 4b, 4c and side wall 4d. The shaft 3 rests against ball bearings 6 as it extends through the neck 4a of housing 4 and meshes at an upper end with rotor connector 6 which is attached to the rotor 1. When shaft 3 is rotated about axis Y, the rotor 1 rotates whilst the housing 4 remains stationary.

In accordance with the invention and as shown in figure 1 an electric motor in housing 4 replaces the need for a driveline driven by the PTO. Instead, a rotatable plate 5 is located in the housing 4 which is connectable to shaft 3 so that when plate 5 rotates shaft 3 and thus rotor 1 also rotates. Plate 5 has a disc form with opposing upper and lower surfaces. Housing 4 remains stationary. Plate 5 comprises a circular plate upon which a plurality of magnets 9 are attached at a radius r around the plate. A pair of electric wire coils 7 are attached to housing 4 opposite each other at a distance of radius r from axis Y so that the magnetic field created by the electric coil is perpendicular to the magnetic field of the magnets. Coils 7 are connected to an electric current by wire 8 inside the housing 4. Wires 8 are connected to a current supply on the tractor which can be controlled by the tractor driver. The magnets 9 are arranged on an upper surface of the plate 5 in a plane parallel to the plane of plate 5. In operation, plate 5 lies in a substantially horizontal plane perpendicular to the Y axis, so that the magnets are also said to lie in a horizontal plane. When the current supply is switched on, the magnetic field generated by coils interacts with the magnetic field of the magnets 9 according to Fleming's rule and the plate 5 rotates and thus so does the rotor 1 and the attached implement. In figure 1, coils 7 are shown attached to upper walls 4b and the magnets 9 are attached to an upper surface of the plate. It is to be understood that magnets 9 could be attached to the lower surface of plate 5 and the coils 7 attached to lower wall 4c of the housing. Further still, the coils 7 could be attached to the side walls 4d of the housing 4 and the magnets 9 could be attached to the edge of the plate 5, so that the respective magnetic fields of the coils and magnets interact to rotate the plate 5.

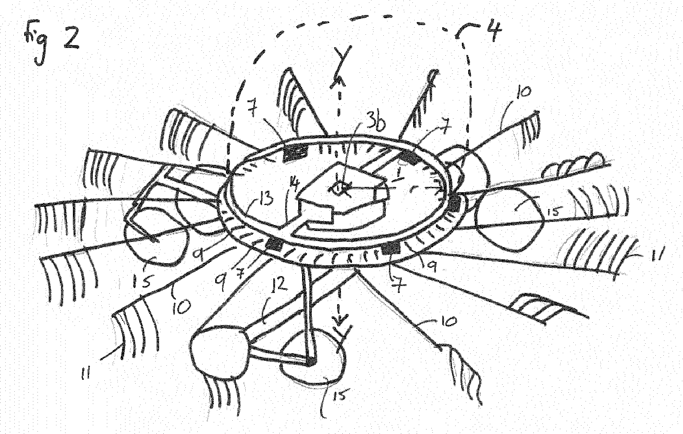

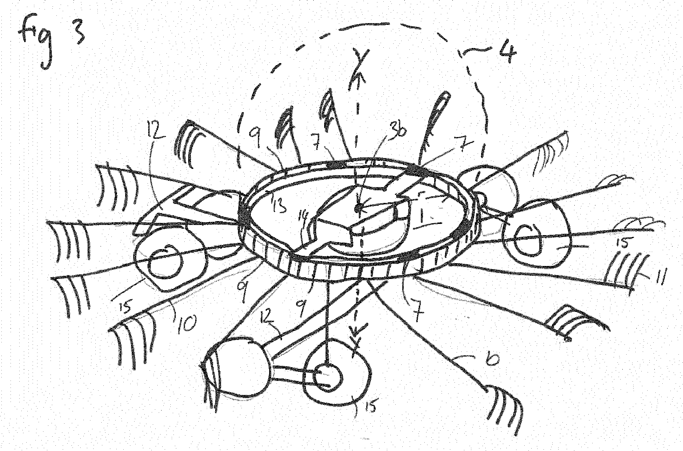

Figure 2 is a perspective view of a rotor 1 of a rake, or tedder. The same features of figure 1 are referenced with the same numerals in figures 2 and 3. In figure 1, rotor 1 has a disc form having opposing upper and lower surfaces. In figures 2 and 3 the implements carried by the rotor 1 are a number of tine arms 10 which extend radially from the lower surface of rotor 1 and which are provided with tines 11 extending down to the ground. The rotor 1 is attached to a frame 12 having ground engaging wheels 15 to support it over the ground. Frame 12 is connected to a main body of a rake, or tedder by a rotor arm (not shown). Rotor 1 is supported by shaft 3b and respective bearings (not shown) and thereby rotates about the Y axis. Shaft 3b is fixedly attached to frame 12 so that it does not rotate. A plurality of magnets 9 are attached at regularly spaced intervals in a circle to the upper surface of rotor 1 at a radius r. The magnets 9 lie in a plane parallel to the plane of rotor 1. In a working position, rotor 1 lies in a substantially horizontal plane perpendicular to the Y axis, so that the magnets are also said to lie in a horizontal plane. A hollow ring frame 13 having a radius slightly less than radius r is connected to the rotor 1 by means of a diametric frame piece 14 which is connected to the shaft 3b such that it does not rotate when rotor 1 rotates. In this way, rotor 1 is rotatable with respect to ring frame 13 which is stationary. A plurality of coils 7 are attached to a lower surface, or edge of the ring frame 13 so that they extend over the magnets 9, or so that the magnetic field associated with the electric coils 7 interacts with the magnetic fields of the magnets in accordance with Fleming's rule and rotate the rotor 1.

The coils 7 are connected to a current supply on the tractor by wires (not shown) which are routed within the ring frame 13.

Figure 3 is an alternative arrangement of the invention of the rotor 1 of figure 2. In figure 3 the magnets 9 are attached at regularly spaced intervals in a circle to the upper surface of rotor 1 at a radius r in a plane perpendicular to the plane of rotor 1, that is the magnets 9 are attached to the rotor 1 in planes parallel to the Y axis. When the rotor is in a working position the magnets 9 stand in a substantially vertical plane. A plurality of coils 7 are attached to the edges and or upper surface of ring frame 13 so that the magnetic field associated with the electric coils 7 interacts with the magnetic fields of the magnets 9 in accordance with Fleming's rule and rotate the rotor 1.

In figures 2 and 3 a housing, 4 extends over the magnets 9 and coils 7 to protect them from the elements. The housing is stationary with respect to the rotor 1 and may be attached to ring frame 13, and/or shaft 3b. As an alternative arrangement, the coils 7 in figures 2 and 3 may be attached to the inside walls of the housing 4 instead of the ring frame 13.

An electric drive as described herein reduces the need for a cumbersome mechanical drive to connect the rotor to the tractor, since the wiring from the rotors is flexible and easily attached or routed through the frame of the tool to the tractor. This has cost and maintenance advantages. Moreover, each rotor can be controlled separately by the driver leading to greater efficiency when not all rotors are required. Further, the rotors can be stopped quickly when required which is not possible with the known rotor drive arrangements.

## Claims

1. An electrically driven rotatable agricultural tool comprising an implement carrying rotor 1 to which magnets 9 are attached and which rotates about a shaft 3,3b and wherein a plurality of electric coils 7 are arranged which are stationary with respect to the rotor so that when an electric current passes through the coils 7 under the influence of the magnetic field of the magnets 9, rotor 1 rotates and thus the implement carried rotates.

2. A rotatable agricultural tool as claimed in claim 1 wherein the magnets 9 are arranged within a housing 4 connected to the shaft 3, 3b.

3. A rotatable agricultural tool as claimed in claim 2 wherein the coils 7 are attached to the housing.

4. A rotatable agricultural tool as claimed in any preceding claim wherein the magnets 9 are arranged in a spaced arrangement on the rotor 1.

5. A rotatable agricultural tool as claimed in any preceding claim wherein the magnets 9 are arranged in a spaced ring arrangement on the rotor 1.

6. A rotatable agricultural tool as claimed in any preceding claim wherein the magnets 9 are arranged in a horizontal plane on the rotor 1.

7. A rotatable agricultural tool as claimed in any of claims 1 to 5 wherein the magnets 9 are arranged in a vertical plane on the rotor 1.

8. A rotatable agricultural tool as claimed in any preceding claim wherein the coils 7 are arranged on a ring frame 13 connected to the shaft 3, 3b.

9. A electrically driven rotatable agricultural tool comprising a rotatable shaft 3 to which a rotor 1 and a plate 5 are meshed to rotate together, said plate 5 housed within a stationary housing 4 through which the shaft 3 passes, wherein the plate 5 is provided with magnets 9 and within the housing 4 stationary coils 7 are arranged so that when an alternating current passes through the coils 7 under the influence of the magnetic field of the magnets 9, a force is produced to rotate the plate 5 and thus the rotor 1.
